# EUROPEAN PATENT SPECIFICATION

(11) **EP 2 222 022 B1**
(45) Date of publication and mention of the grant of the patent: **14.12.2016**
(21) Application number: 08734088.1
(22) Date of filing: 16.04.2008
(51) Int. Cl.: H04Q 11/00, H04L 12/773, H04L 12/721, H04J 3/12, H04L 12/24

(54) **A FORWARDING DEVICE AND A FORWARDING METHOD OF SIGNALING COMMUNICATION NETWORK INFORMATION AND MANAGEMENT COMMUNICATION NETWORK INFORMATION**
WEITERLEITUNGSEINRICHTUNG UND WEITERLEITUNGSVERFAHREN ZUM SIGNALISIEREN VON KOMMUNIKATIONSNETZINFORMATIONEN UND VERWALTUNGSKOMMUNIKATIONSNETZINFORMATIONEN
DISPOSITIF D'ACHEMINEMENT ET PROCÉDÉ D'ACHEMINEMENT D'INFORMATIONS DE RÉSEAU DE COMMUNICATION DE SIGNALISATION (SCN) ET D'INFORMATIONS DE RÉSEAU DE COMMUNICATION DE GESTION (MCN)

(30) Priority: 19.11.2007 CN 200710188339
(43) Date of publication of application: 25.08.2010
(73) Proprietor: ZTE Corporation, Shenzhen, Guangdong 518057 (CN)
(72) Inventor: SHU, Huade, Shenzhen Guangdong 518057 (CN)
(74) Representative: Persson, Albin
(86) International application number: PCT/CN2008/070730
(87) International publication number: WO 2009/065304

(56) References cited:
- CN-A- 1 482 745
- CN-A- 1 558 635
- CN-A- 1 852 071
- US-A1- 2003 208 585
- US-A1- 2005 249 497
- DIETER BELLER ALCATEL-LUCENT GERMANY: "T-MPLS DCN for Management (MCN) and Control (SCN);WD", ITU-T DRAFT ; STUDY PERIOD 2005-2008, INTERNATIONAL TELECOMMUNICATION UNION, GENEVA ; CH, vol. 14, 21 February 2007 (2007-02-21), pages 1-21, XP017537257, [retrieved on 2007-02-21]

## Description

### Technical Field

The present invention relates to the field of optical network, and in particular, to a device and a method for transmitting Signaling Communication Network (SCN) information and Management Communication Network (MCN) information in an ASON (Automatic Switch Optical Network).

### Background of the Invention

With the rapid development of optical communication technology, the optical communication system evolves toward the direction of high rate, large capacity, long distance and intelligence. ASON based on circuit switch intelligence has already been commercially applied, and an intelligent optical transport network system based on optical cross connect or optical add/drop multiplexing function will emerge in the future.

The ASON optical transmission system differs from a traditional optical transport network in that a separate ASON control plane is incorporated in the ASON based on the traditional optical network, thereby implementing functions such as rapid and dynamic provision of service bandwidth, increasing network survivability and resource utilization efficiency, developing new services (such as Bandwidth on Demand (BOD), Optical Virtual Private Network (OVPN), service based on Service Level Agreement (SLA), and so on), and it is one of the major directions of the evolvement of the optical network at present.

The ASON control plane is composed of a set of control elements providing specific functions including routing and signaling, and is supported by a signaling network. The information stream required for interoperability between the control plane elements and communication between the elements can be obtained through an interface. Main functions of the control plane include: the capability of setting up, removing and maintaining an end-to-end connection by signaling support, selecting a proper route for a connection by routing; executing protection and restoration functions when the network has a failure; automatically discovering adjacent relationship and link information, distributing link status (such as available capacity and failure, etc.) information to support setup, removal and restoration of connections.

The ASON control plane is a distributed system, in which the control units between nodes exchange information through the signaling network. The information transmission efficiency in the signaling network directly affects the time for setting up, removing and maintaining an end-to-end connection; when the network has a failure, the information transmission efficiency in the signaling network directly affects the time for executing protection and restoration.

The protection and restoration speed of ASON is a primary indication of the performance of the ASON system. The performance is generally indicated by restoration switch time, which is the time period from the occurrence of failure to the successful setup of restoration path. There are generally two ways of determining the service to be restored, namely failure positioning and terminal detection; in the former way, failure positioning is performed according to failure detection information to determine the failure point, and the service to be restored is reflected by the failure positioning information; in the latter way, a terminal determines whether the service has a failure according to signal quality and determines the service to be restored. The processing for restoring a service is jointly implemented by the intelligent control units of the nodes on the system optical channel, where the node calculating a restoration route is called a main control node.

Failure information needs to be transmitted from the intelligent control unit of the local node to the intelligent control unit of the main control node. Assuming that the transmission time on each link is Tt, then the entire transmission time of the failure message is the number of links n×Tt, wherein n is the maximum number of hops between the main control node and the nodes on the restoration route. Thus, it can be seen that the transmission time of the signaling information carrying the ASON control plane increases with the increase of the maximum number of hops, and the transmission time of the signaling information directly affects the restoration switch time.

The interchange of the signaling information of control plane between nodes is implemented by the SCN; and the interchange of the management information of the optical network between nodes is implemented by the MCN. The SCN and MCN may be realized by a special data communication network or an optical transport network in-band network.

The physical channel of the in-band network may be a Data Communication Channel (DCC) of a Synchronous Digital Hierarchy (SDH) network, or a General Communication Channel (GCC) of an Optical Transport Network (OTN).

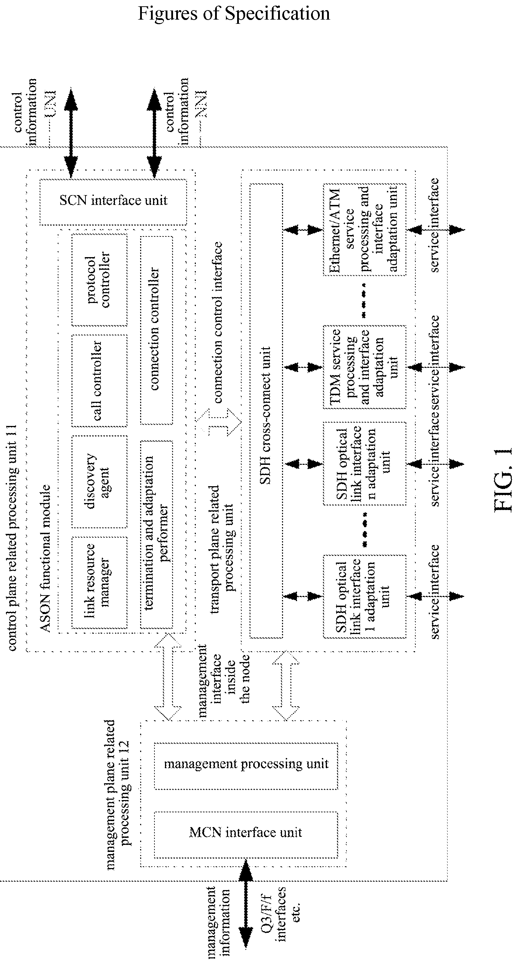

FIG. 1 is a schematic diagram of the structure of an ASON node device based on SDH in the prior art. As shown in FIG. 1, an ASON system has functions of transport plane, control plane and management plane, wherein:
Functional elements related to transport plane include: basic SDH functions, multi-service carrying and processing functions, and newly added functions related to realization of the ASON node device based on SDH, etc. Wherein, the basic SDH functions include: a SDH cross unit, an interface processing unit (not shown in the figure), an overhead processing unit (not shown in the figure), and a timing and synchronization unit (not shown in the figure), etc.

A control plane related processing unit 11 (also called functional element) includes a connection controller (CC), a route controller (RC), a link resource manager (LRM), a traffic policy (TP) (not shown in the figure), a call controller (CallC), a discovery agent (DA), a termination and adaptation performer (TAP), a protocol controller (PC), a SCN interface unit, etc.

A management plane related processing unit 12 (also called functional element) includes a management processing unit, a MCN interface unit, etc.

The Data Communication Network (DCN) processing function of the ASON node device based on SDH can transmit management information and signaling information between different network elements by providing a data communication function required for constructing the DCN and through the transport channels provided by the DCN. DCN includes MCN and SCN. The Data Communication Function (DCF) of DCN is a part of the functions of each ASON device, and as a means for information exchange between MCN and SCN, it provides a data communication service involving functions of protocols of the lower three layers in an OSI (Open System Interconnect) reference model. The DCF includes a routing function of the DCN and implements information interchange between different nodes through relevant DCN interfaces and encapsulation protocols.

The DCN interfaces of the ASON node device based on SDH/OTN can support any combination of ECC (Embedded Communication Channel) interface, WAN (Wide Area Network) interface and LAN (Local Area Network) interface. The physical interface type of the ECC interface is mainly DCC/GCC interface, and the physical interface type of the WAN interface and LAN interface is mainly Ethernet interface.

When the DCC (or GCC) interface is used, the ways of protocol encapsulation of DCN can be selected from OSI/LAPD/DCC (or GCC), IP/PPP (HDLC)/DCC (or GCC), MPLS/PPP/DCC (or GCC); wherein the LAPD is an abbreviation of Link Access Procedure D-channel; IP is an abbreviation of Internet Protocol; PPP is an abbreviation of Point-to-Point Protocol; HDLC is an abbreviation of High-level Data Link Control; MPLS is an abbreviation of Multi-Protocol Label Switching.

DCC (or GCC) is located in the physical layer of ECC, and is a physical realization of the logical interface between the ASON node device based on SDH (OTN) and DCN. As for a SDH network, the DCC bytes can be D1∼D3 bytes in SDH Regenerator Section OverHead (RSOH), with a rate up to 192kb/s; or can be D4∼D12 bytes in SDH Multiplex Section OverHead (MSOH), with a rate up to 576kb/s; or can be D1∼D3 and D4∼D12 bytes in SDH Section OverHead, with a rate up to 768kb/s; or can be other idle overhead bytes in the SDH frame.

When the Ethernet interface is used, the ways of protocol encapsulation of DCN can be selected from OSI (or CLNP)/IS-IS/ES-IS/802.3, IP/ETHERNET II and MPLS/ETHERNET II. Types of the Ethernet interface of DCN may include Gigabit Ethernet (GE), 10/100BASE-T. The CLNP is an abbreviation of Connectionless Network Protocol; IS-IS is an abbreviation of Intermediate System to Intermediate System; ES-IS is an abbreviation of End system to Intermediate System; and ETHERNET II is type-II Ethernet.

DCN interfaces of SCN and MCN can use the same physical channel, or can use different physical channels.

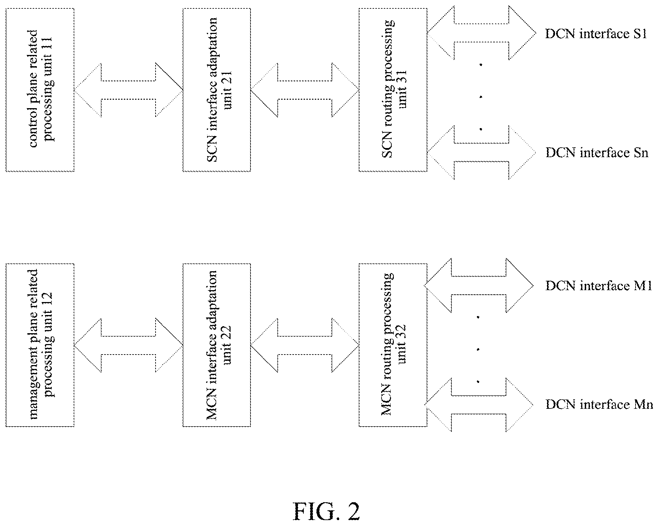

FIG. 2 is a block diagram of the structure of a DCN processing unit of an ASON node device in the prior art when DCN interfaces of SCN and MCN use different DCC channels. Since SCN and MCN use different DCC channels, they will not affect each other.

In FIG. 2, a control plane related processing unit 11 generates information related to SCN, and transmits the related information to a SCN routing processing unit 31 after protocol and interface adaptation through a SCN interface adaptation unit 21. The SCN routing processing unit 31 executes SCN routing function for SCN information from the local node delivered by the SCN interface adaptation unit 21 as well as SCN information of other nodes delivered by a buffer unit (not shown in the figure), and according to a corresponding destination forwarding route, sends the related information to the SCN interface adaptation unit 21 accordingly to be processed by the control plane related processing unit 11 of the local node, or sends it to the buffer unit (not shown in the figure) to be sent to a corresponding DCN interface, and finally to a control plane related processing unit of other nodes for processing.

A management plane related processing unit 12 generates information related to MCN, and transmits the related information to a MCN routing processing unit 32 after protocol and interface adaptation through a MCN interface adaptation unit 22. The MCN routing processing unit 32 executes MCN routing function for MCN information from the local node delivered by the MCN interface adaptation unit 22 as well as MCN information of other nodes delivered by a buffer unit (not shown in the figure), and according to a corresponding destination forwarding route, sends the related information to the MCN interface adaptation unit 22 accordingly to be processed by the management plane related processing unit 12 of the local node, or sends it to the buffer unit (not shown in the figure) to be sent to a corresponding DCN interface, and finally to a management plane related processing unit 12 of other nodes for processing.

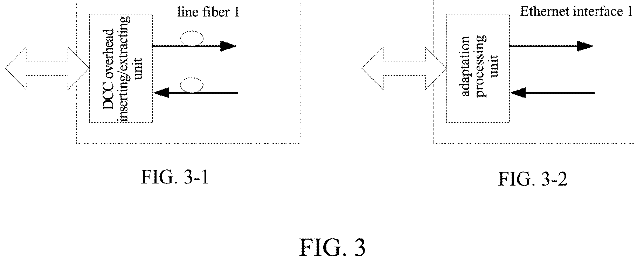

FIG. 3 includes block diagrams of DCN interfaces of an ASON device in the prior art. The block diagrams of DCN interfaces of SCN and MCN are the same. Wherein, FIG. 3-1 is a block diagram illustrating a DCN interface using an in-band DCC channel; FIG. 3-2 is a block diagram illustrating a DCN interface using an in-band Ethernet channel.

As shown in FIG. 3-1, when it is determined that SCN/MCN related information passing through a SCN routing processing unit 31 or MCN routing processing unit 32 needs to be sent to the in-band DCC channel, it is inserted into the DCC channel and then sent to a line fiber after protocol and interface adaptation by an overhead inserting unit; the processing flow for SCN/MCN related information from the in-band DCC channel is contrary to the above flow, i.e., after corresponding overhead is extracted with a DCC overhead extracting unit and subjected to protocol and interface adaptation, it is sent to the SCN routing processing unit 31 or MCN routing processing unit 32 for processing.

As shown in FIG. 3-2, when it is determined that SCN/MCN related information passing through the SCN routing processing unit 31 or MCN routing processing unit 32 needs to be sent to an out-band Ethernet channel, it is sent to the out-band Ethernet channel after protocol and interface adaptation by an adaptation unit; the processing flow for SCN/MCN related information from the out-band Ethernet channel is contrary to the above flow, i.e., it is sent to the SCN routing processing unit 31 or MCN routing processing unit 32 for processing after protocol and interface adaptation.

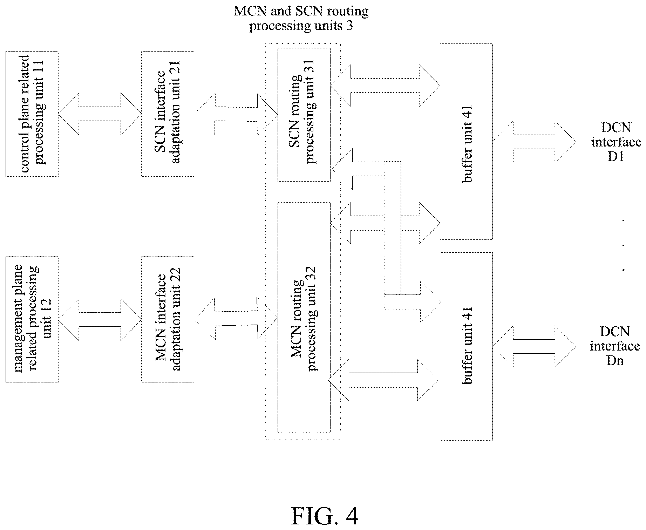

FIG. 4 is a block diagram of the structure of a DCN processing unit of an ASON node device that does not have traffic control in the prior art when DCN interfaces of SCN and MCN use the same DCC channel.

FIG. 4 is identical to FIG. 2 except that FIG. 4 includes a buffer unit 41. Since DCN interfaces of SCN and MCN use the same DCC channel, the SCN/MCN related information that has been processed by MCN and SCN routing processing units 3 needs to be sequenced with the buffer unit 41, and then inserted into the DCC channel and sent to a line fiber after protocol and interface adaptation by an overhead inserting unit. The processing flow for SCN/MCN related information from in-band DCC channel is contrary to the above flow, i.e., after corresponding overhead is extracted by a DCC overhead extracting unit and subjected to protocol and interface adaptation, it needs to be distributed through the buffer unit 41 and then sent to the SCN routing processing unit 31 or MCN routing processing unit 32 respectively for processing.

In FIG. 4, since the SCN and MCN use the same physical channel, the SCN and MCN may affect each other, especially when the bandwidth occupied by MCN increases suddenly, MCN information may block SCN information at the buffer unit due to limitation of DCC bandwidth, and thus have an impact on efficient transmission of SCN information.

The case in which a GCC channel is used for transmission is similar to that of the DCC channel.

To sum up, in the case where SCN and MCN use the same in-band DCC channel or GCC channel for transmission, the SCN and MCN may affect each other due to limitation of bandwidth. In order to ensure the protection and restoration time of the service, a suitable method should be adopted to guarantee efficient transmission of SCN information and to reduce the impact of MCN information on transmission of SCN information.

The document "T-MPLS DCN for Management (MCN) and Control (SCN)" discloses the technology independent as well as the T-MPLS technology specific parts.

The document discloses dynamic bandwidth allocation and queue management methods and algorithms, in a passive optical network, which can be designed to avoid fragmentation loss and guarantee that a length of a grant issued by an OLT will match precisely the count of bytes to be transmitted by an ONU.

### Summary of the Invention

The technical problem to be solved by the present invention is to overcome the deficiencies in the prior art and provide a device and method for transmitting SCN and MCN information in an ASON network, which can ensure efficient transmission of SCN information when SCN and MCN use the same in-band DCC channel or GCC channel and reduction of the impact of MCN information on transmission of SCN information.

In order to solve the above problem, the present invention provides a device according to claim 1. Further improvements and embodiments are provided in the dependent claims.

Also provided is a device for transmitting Signaling Communication Network (SCN) information and Management Communication Network (MCN) information, comprising: a control plane related processing unit, a SCN interface adaptation unit, a management plane related processing unit, a MCN interface adaptation unit, and DCN interfaces; wherein the device further comprises a routing buffering module;
the routing buffering module is configured to perform routing processing and buffering for received SCN information, which is generated by the control plane related processing unit and for which protocol and interface adaptation processing has been performed by the SCN interface adaptation unit, and received MCN information, which is generated by the management plane related processing unit and for which protocol and interface adaptation processing has been performed by the MCN interface adaptation unit, and to preferentially transmit the received SCN information to the DCN interfaces to be forwarded.

Additionally, the routing buffering module comprises a routing processing unit and a buffer unit; wherein:
the routing processing unit is configured to receive SCN information and MCN information from the SCN interface adaptation unit and the MCN interface adaptation unit respectively, and to transmit the received SCN information and MCN information to the buffer unit via different physical channels or logical channels after performing routing processing for the received SCN information and MCN information;
the buffer unit has priority sequencing and buffering functions, distinguishes received SCN information from received MCN information according to different physical or logical channels, performs priority sequencing and buffering for the received SCN information and MCN information, and preferentially transmits SCN information to the DCN interfaces to be forwarded.

Additionally, the routing processing unit is divided into a SCN routing processing unit and a MCN routing processing unit; wherein:
the SCN routing processing unit is configured to receive SCN information from the SCN interface adaptation unit and transmit the SCN information to the buffer unit via a first physical channel;
the MCN routing processing unit is configured to receive MCN information from the MCN interface adaptation unit and transmit the MCN information to the buffer unit via a second physical channel;
the buffer unit preferentially transmits the SCN information received from the first physical channel to the DCN interfaces to be forwarded.

Additionally, the first physical channel and the second physical channel are different channels respectively selected from Ethernet channel and High-level Data Link Control (HDLC) channel.

Additionally, the routing processing unit transmits the received SCN information to the buffer unit via a first logical channel, and transmits the received MCN information to the buffer unit via a second logical channel;
the first logical channel and the second logical channel are Virtual Local Area Network (VLAN) logical channels with different VLAN Identifications (IDs);
the buffer unit distinguishes SCN information from MCN information according to VLAN IDs, and preferentially transmits the SCN information received from the first logical channel to the DCN interfaces to be forwarded.

Additionally, the buffer unit further has a traffic limitation function, and as for SCN/MCN information packets to be sent to the same destination DCN interface:
when the quantity of MCN information packets buffered is larger than a pre-set low-priority buffering upper limit or the quantity of SCN information packets buffered is larger than a pre-set high-priority buffering upper limit, MCN information packets are discarded so that the quantity of the MCN information packets buffered is lower than the upper limit; and/or
when the quantity of MCN information packets buffered is larger than the pre-set low-priority buffering upper limit or the quantity of SCN information packets buffered is larger than the pre-set high-priority buffering upper limit, traffic of the MCN information packets is reduced.

Additionally, the routing buffering module comprises a routing processing unit; wherein:
the control plane related processing unit or the SCN interface adaptation unit is further configured to add priority information with a higher priority into SCN information packets containing SCN information of a local node to be transmitted;
the management plane related processing unit or MCN interface adaptation unit is further configured to add priority information with a lower priority into MCN information packets containing MCN information of the local node to be transmitted;
the routing processing unit is configured to receive SCN information packets from the SCN interface adaptation unit and receive MCN information packets from the MCN interface adaptation unit, perform routing processing for the SCN information packets and the MCN information packets, perform priority sequencing and buffering according to the priority information, and preferentially transmit the SCN information packets which have a higher priority to the DCN interfaces to be forwarded.

Additionally, the control plane related processing unit or the SCN interface adaptation unit is further configured to set a larger value at a Type of Service (TOS) field of Internet Protocol (IP) messages encapsulating SCN information of the local node to be transmitted;
the management plane related processing unit or the MCN interface adaptation unit is further configured to set a smaller value at the TOS field of IP messages encapsulating MCN information of the local node to be transmitted;
interfaces between the routing processing unit and the SCN interface adaptation unit and MCN interface adaptation unit are based on IP protocol, and the routing processing unit has a Layer-3 switching function; the routing processing unit distinguishes SCN information from MCN information according to the TOS field of received IP messages, and preferentially transmits SCN information packets which have a higher priority to the DCN interfaces to be forwarded.

Additionally, the control plane related processing unit or the SCN interface adaptation unit is further configured to set a larger value at an Experimental (EXP) field of Multiprotocol Label Switching (MPLS) data packets encapsulating SCN information of the local node to be transmitted;
the management plane related processing unit or the MCN interface adaptation unit is further configured to set a smaller value at the EXP field of MPLS data packets encapsulating MCN information of the local node to be transmitted;
interfaces between the routing processing unit and the SCN interface adaptation unit and MCN interface adaptation unit are based on MPLS protocol, and the routing processing unit has Layer-2/Layer-3 switching functions; the routing processing unit distinguishes SCN information from MCN information according to the EXP field of received MPLS data packets, and preferentially transmits the SCN information packets which have a higher priority to the DCN interfaces to be forwarded.

Additionally, the routing processing unit further has a traffic limitation function, and as for SCN/MCN information packets to be sent to the same destination DCN interface:
when the quantity of MCN information packets buffered is larger than a pre-set low-priority buffering upper limit or the quantity of SCN information packets buffered is larger than a pre-set high-priority buffering upper limit, MCN information packets are discarded so that the quantity of the MCN information packets buffered is lower than the upper limit; and/or
when the quantity of MCN information packets buffered is larger than a pre-set low-priority buffering upper limit or the quantity of SCN information packets buffered is larger than a pre-set high-priority buffering upper limit, traffic of the MCN information packets is reduced.

The present invention also provides a method according to claim 10. Further improvements and embodiments are provided in the dependent claims.

Also provided is a method for transmitting Signaling Communication Network (SCN) information and Management Communication Network (MCN) information, the method comprising the following steps of:
A: a control plane related processing unit transmitting generated SCN information to a SCN interface adaptation unit for protocol and interface adaptation processing, and then the SCN information being output to a routing buffering module; a management plane related processing unit transmitting generated MCN information to a MCN interface adaptation unit for protocol and interface adaptation processing, and then the MCN information being output to the routing buffering module;
B: the routing buffering module performing routing processing and buffering for received SCN information and MCN information, and forwarding the received SCN information preferentially.

Additionally, the step B further comprises the following sub-steps of:
B1: a routing processing unit of the routing buffering module transmitting the received SCN information and MCN information to a buffer unit of the routing buffering module via different physical channels or logical channels after performing routing processing for the received SCN information and MCN information;
B2: the buffer unit distinguishing received SCN information and MCN information according to the different physical or logical channels, performing priority sequencing and buffering for the received SCN information and MCN information and forwarding the SCN information preferentially.

Additionally, the routing processing unit transmits the SCN information via one of Ethernet channel and High-level Data Link Control (HDLC) channel and transmits the MCN information via the other; or
the routing processing unit transmits the SCN information and MCN information via Virtual Local Area Network (VLAN) logical channels with different VLAN identifications (IDs), and the buffer unit distinguishes SCN information from MCN information according to the VLAN IDs.

Additionally, the method further comprises:
before the SCN information is transmitted to the routing buffering module, the control plane related processing unit or the SCN interface adaptation unit adding priority information with a higher priority into SCN information packets containing SCN information of a local node to be transmitted;
before the MCN information is transmitted to the routing buffering module, the management plane related processing unit or the MCN interface adaptation unit adding priority information with a lower priority into MCN information packets containing MCN information of the local node to be transmitted;
the routing buffering module performing routing processing for the SCN information packets and MCN information packets, performing priority sequencing and buffering according to the priority information, and preferentially forwarding the SCN information packets which have a higher priority.

Additionally, the SCN information packets and MCN information packets are IP messages, and the priority information is a Type of Service (TOS) field of the IP messages;
the SCN information packets and MCN information packets are MPLS data packets, and the priority information is an Experimental (EXP) field of the MPLS data packets.

Additionally, the method further comprises the following steps of:
as for SCN/MCN information packets to be sent to the same destination DCN interface:
   when the quantity of MCN information packets buffered in the routing buffering module is larger than a pre-set low-priority buffering upper limit or the quantity of SCN information packets buffered is larger than a pre-set high-priority buffering upper limit, discarding MCN information packets so that the quantity of the MCN information packets buffered is lower than the upper limit; and/or
   when the quantity of MCN information packets buffered in the routing buffering module is larger than a pre-set low-priority buffering upper limit or the quantity of SCN information packets buffered is larger than a pre-set high-priority buffering upper limit, reducing traffic of the MCN information packets.
   The device and method of the present invention can realize efficient transmission of SCN information and reduction of the impact of MCN information on transmission of SCN information in ASON when SCN and MCN use the same in-band DCC channel or GCC channel, thereby improving the performance of the ASON control plane.

### Brief Description of the Drawings

FIG. 1 is a schematic diagram of the structure of an ASON node device based on SDH in the prior art;
FIG. 2 is a block diagram of the structure of the DCN processing unit of an ASON node device in the prior art when DCN interfaces of SCN and MCN use different DCC channels;
FIG. 3 includes block diagrams of DCN interfaces of an ASON device in the prior art;
FIG. 4 is a block diagram of the structure of the DCN processing unit of an ASON node device that does not have traffic control in the prior art when DCN interfaces of SCN and MCN use the same DCC channel;
FIG. 5 is a schematic diagram of the structure of a device for transmitting SCN and MCN information using a separate buffer unit for priority sequencing/traffic limitation according to the present invention;
FIG. 6-1 and FIG. 6-2 are flows charts of methods for transmitting SCN and MCN information using a separate buffer unit for priority sequencing/traffic limitation according to the present invention;
FIG. 7 is a schematic diagram of the structure of the device for transmitting SCN and MCN information according to a first embodiment of the present invention;
FIG. 8 is a schematic diagram of the structure of the device for transmitting SCN and MCN information according to a second embodiment of the present invention;
FIG. 9 is a schematic diagram of the structure of a device for transmitting SCN and MCN information using a routing processing unit for priority sequencing/traffic limitation according to the present invention;
FIG. 10 is a flow chart of a method for transmitting SCN and MCN information using a routing processing unit for priority sequencing/traffic limitation according to the present invention;
FIG. 11 is a schematic diagram of the structure of a device for transmitting SCN and MCN information according to a third embodiment of the present invention;
FIG. 12 is a schematic diagram of the structure of a device for transmitting SCN and MCN information according to a fourth embodiment of the present invention;
FIG. 13 is a schematic diagram of the format of a MPLS label.

### Preferred Embodiments of the Invention

In order to ensure the restoration switch time of services and to reduce the impact of MCN information on the transmission of SCN information, efficient transmission of SCN information should be assured when ASON control information and management information are transmitted simultaneously. An effective method is that a buffer unit forwards control information of SCN preferentially, or internal routing processing units forward control information of SCN preferentially.

The present invention will be described in detail below with reference to drawings and embodiments.

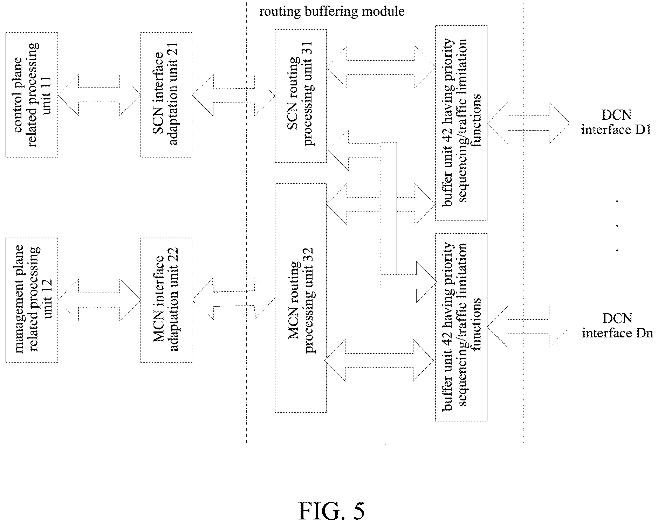

FIG. 5 is schematic diagram of the structure of a device for transmitting SCN and MCN information using a separate buffer unit for priority sequencing/traffic limitation according to the present invention. The buffer unit having priority sequencing/traffic limitation functions is employed in the device for transmitting SCN and MCN information to ensure efficient transmission of SCN information. As shown in FIG. 5, the device comprises: a control plane related processing unit, a SCN interface adaptation unit, a SCN routing processing unit, a management plane related processing unit, a MCN interface adaptation unit, a MCN routing processing unit, a buffer unit having priority sequencing/traffic limitation functions, and DCN interfaces (D1, ..., Dn).

The SCN routing processing unit, MCN routing processing unit and the buffer unit having priority sequencing/traffic limitation functions are collectively called a routing buffering module.

The control plane related processing unit is used to generate information related to SCN (referred to as SCN information for short hereinafter) and transmit the SCN information to the SCN interface adaptation unit; additionally, the control plane related processing unit is also used to receive SCN information of other nodes from the SCN interface adaptation unit through different DCN interfaces;

The SCN interface adaptation unit is used to perform protocol and interface adaptation for the SCN information sent by the control plane related processing unit, and then transmit the SCN information to the SCN routing processing unit; additionally, the SCN interface adaptation unit is also used to transmit SCN information of other nodes from different DCN interfaces forwarded by the SCN routing processing unit to the control plane related processing unit;

The SCN routing processing unit is used to execute SCN routing function; execute SCN routing function for SCN information from the local node delivered by the SCN interface adaptation unit and SCN information of other nodes delivered by the buffer unit having priority sequencing/traffic limitation functions, and according to a corresponding destination forwarding route, send the related information to the SCN interface adaptation unit accordingly to be processed by the control plane related processing unit of the local node, or send the related information to the buffer unit having priority sequencing/traffic limitation functions to be finally sent to a control plane related processing unit of other nodes via a corresponding DCN interface for processing;

The management plane related processing unit is used to generate information related to MCN (referred to as MCN information for short hereinafter) and transmit the MCN information to the MCN interface adaptation unit; additionally, the management plane related processing unit is also used to receive MCN information of other nodes from the MCN interface adaptation unit through different DCN interfaces;

The MCN interface adaptation unit is used to perform protocol and interface adaptation for the MCN information sent by the management plane related processing unit, and then transmit the MCN information to the MCN routing processing unit; additionally, the MCN interface adaptation unit is also used to transmit MCN information of other nodes from different DCN interfaces forwarded by the MCN routing processing unit to the management plane related processing unit;

The MCN routing processing unit is used to execute MCN routing function; execute MCN routing function for MCN information from the local node delivered by the MCN interface adaptation unit and MCN information of other nodes delivered by the buffer unit having priority sequencing/traffic limitation functions, and according to a corresponding destination forwarding route, send the related information to the MCN interface adaptation unit accordingly to be processed by the management plane related processing unit of the local node, or send the related information to the buffer unit having priority sequencing/traffic limitation functions to be finally sent to a management plane related processing unit of other nodes via a corresponding DCN interface for processing;

The buffer unit having priority sequencing/traffic limitation functions is used to perform priority sequencing and/or traffic limitation for SCN information and MCN information, and preferentially forward the SCN information to a corresponding DCN interface to be transmitted to a control plane related processing unit of other nodes for processing; additionally, the buffer unit having priority sequencing/traffic limitation functions is also used to send SCN information and MCN information delivered by DCN interfaces to the SCN routing processing unit and MCN routing processing unit respectively for processing.

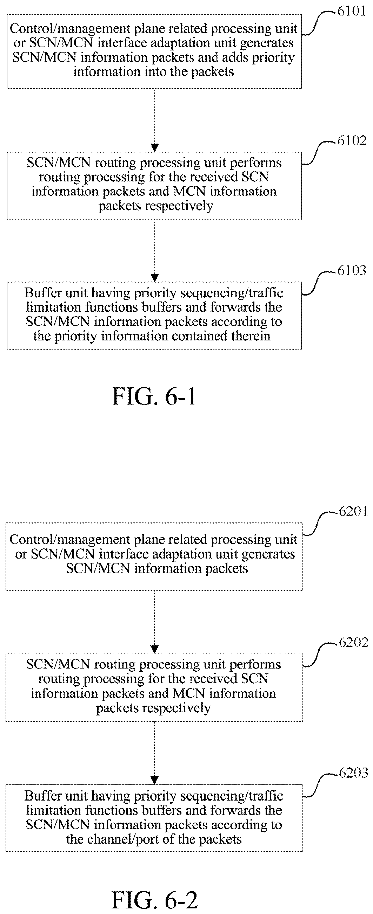

FIG. 6-1 and FIG. 6-2 are flows charts of methods for transmitting SCN and MCN information using a separate buffer unit for priority sequencing/traffic limitation according to the present invention.

The method shown in FIG. 6-1 comprises the following steps of:
6101: The control plane related processing unit or SCN interface adaptation unit adds priority information of a higher priority into SCN information packets containing SCN information of the local node to be transmitted; the management plane related processing unit or MCN interface adaptation unit adds priority information of a lower priority into MCN information packets containing MCN information of the local node to be transmitted;
6102: The SCN routing processing unit and MCN routing processing unit respectively perform routing processing for the SCN information packets and MCN information packets received, and transmit the information packets after the routing processing to the buffer unit having priority sequencing/traffic limitation functions;
6103: The buffer unit having priority sequencing/traffic limitation functions buffers and forwards the SCN information packets and MCN information packets according to the priority information contained therein; and the following rules are followed when the buffering and forwarding are performed:
6103A: Information packets to be sent to the same destination DCN interface are sequenced according to their priorities when buffered so that information packets having a higher priority in the buffer are forwarded preferentially; since the priority of the SCN information packets is higher than that of the MCN information packets, the SCN information packets are forwarded preferentially;

Preferential forwarding can be implemented in the following two ways:
1) Information packets having a lower priority (MCN information packets) in the buffer are not transmitted until the completion of transmitting the information packets having a higher priority (SCN information packets);
2) More bandwidth is allocated to the information packets having a higher priority and less bandwidth to the information packets having a lower priority at the same time.

6103B: As for information packets to be sent to the same destination DCN interface, when the traffic of the MCN information packets is higher than a pre-set low-priority traffic upper limit, forwarding of the MCN information packets is limited and the traffic of the MCN information packets is limited below the low-priority traffic upper limit, and the information packets to be forwarded are buffered and sequenced in the buffer unit; when the quantity of the MCN information packets buffered is larger than a pre-set low-priority buffering upper limit, corresponding packets may be discarded so that the quantity of the MCN information packets buffered is lower than the upper limit;

When preferential forwarding is implemented in the above way of 2), traffic limitation is performed by further reducing the bandwidth allocated to the information packets having a lower priority based on the current bandwidth allocated thereto.

6103C: As for information packets to be sent to the same destination DCN interface, when the quantity of the SCN information packets buffered is higher than a pre-set high-priority buffering upper limit, the traffic of the MCN information packets can be further reduced to shorten the buffering time of the SCN information packets as much as possible, thereby ensuring the forwarding of the information packets having a higher priority.

Additionally, according to the basic principle of the present invention, when a separate buffer unit is used to perform priority sequencing/traffic limitation, the buffer unit may identify the SCN information packet (information packet with a higher priority) and MCN information packet (information packet with a lower priority) in other ways besides the way of identifying the SCN information packet and MCN information packet according to the priority information contained therein, for example:
the control plane related processing unit or the SCN interface adaptation unit, as well as the management plane related processing unit or the MCN interface adaptation unit do not add priority information into SCN information packets/MCN information packets; and the buffer unit distinguishes the SCN information packet (information packet with a higher priority) from the MCN information packet (information packet with a lower priority) according to the physical port or logical port of the SCN information packet/MCN information packet.

The method shown in FIG. 6-2 is identical to that in FIG. 6-1 except that priority information is not added into SCN information packets or MCN information packets; and the buffer unit having priority sequencing/traffic limitation functions distinguishes the SCN information packet from the MCN information packet according to the channel/port of the SCN/MCN information packet and then correspondingly performs buffering and forwarding.

The device for transmitting SCN and MCN information using a separate buffer unit to perform priority sequencing/traffic limitation according to the present invention will be described in detail below in conjunction with specific embodiments.

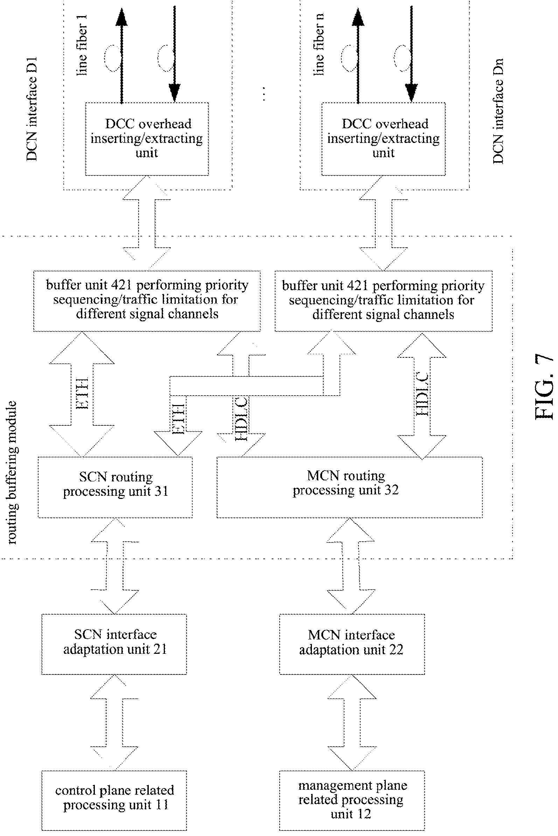

FIG. 7 is a schematic diagram of the structure of a device for transmitting SCN and MCN information according to a first embodiment of the present invention. As shown in FIG. 7, the device comprises a control plane related processing unit, a SCN interface adaptation unit, a SCN routing processing unit, a management plane related processing unit, a MCN interface adaptation unit, a MCN routing processing unit, and DCN interfaces, all of which are already shown in FIG. 5, besides, a buffer unit 421 performing priority sequencing/traffic limitation functions for different signal channels is employed in the device. Additionally, the SCN routing processing unit and the buffer unit transmit SCN information between each other using an Ethernet (ETH) channel; the MCN routing processing unit and the buffer unit transmit MCN information between each other using a High-level Data Link Control (HDLC) channel. SCN information/MCN information that has been processed by the SCN/MCN routing processing unit needs to be sequenced with the buffer unit, and then inserted into the DCC channel and sent to a line fiber after protocol and interface adaptation by an overhead inserting unit.

The buffer unit 421 in this embodiment performs priority sequencing using the information that the SCN information packet and MCN information packet are from different channels as discussed above, i.e., the priority of the information from the ETH channel is considered to be higher than that of the information from the HDLC channel, and thus traffic limitation is performed for the information from the HDLC channel to ensure that the information from the ETH channel (SCN information) is forwarded preferentially.

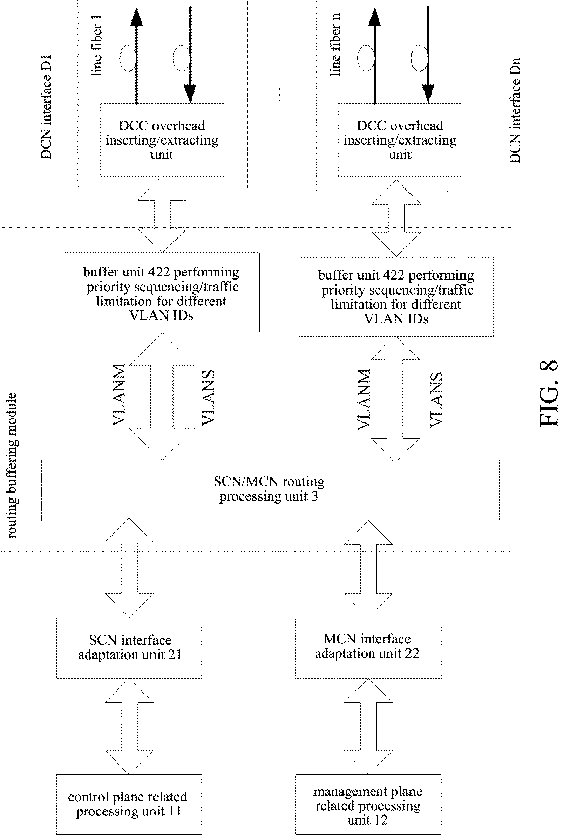

FIG. 8 is a schematic diagram of the structure of a device for transmitting SCN and MCN information according to a second embodiment of the present invention. As shown in FIG. 8, the device comprises a control plane related processing unit, a SCN interface adaptation unit, a management plane related processing unit, a MCN interface adaptation unit, a SCN/MCN routing processing unit, and DCN interfaces, all of which are already shown in FIG. 5, besides, a buffer unit 422 performing priority sequencing/traffic limitation functions for different VLAN IDs (Virtual Local Area Network IDs), i.e., VLANS (corresponding to the SCN information packet) and VLANM (corresponding to the MCN information packet), is employed in the device. Additionally, the SCN/MCN routing processing unit and the buffer unit transmit SCN information/MCN information between each other using an Ethernet (ETH) channel. The SCN information/MCN information that has been processed by the SCN/MCN routing processing unit needs to be sequenced with the buffer unit, and then inserted into the DCC channel and sent to a line fiber after protocol and interface adaptation by an overhead inserting unit.

The buffer unit 422 in this embodiment performs priority sequencing using VLAN information contained in the SCN information packet and MCN information packet, i.e., the priority of the information of which the VLAN ID is VLANS is considered to be higher than that of the information of which the VLAN ID is VLANM, and thus traffic limitation is performed for the information of which the VLAN ID is VLANM to ensure that the information of which the VLAN ID is VLANS (SCN information) is forwarded preferentially.

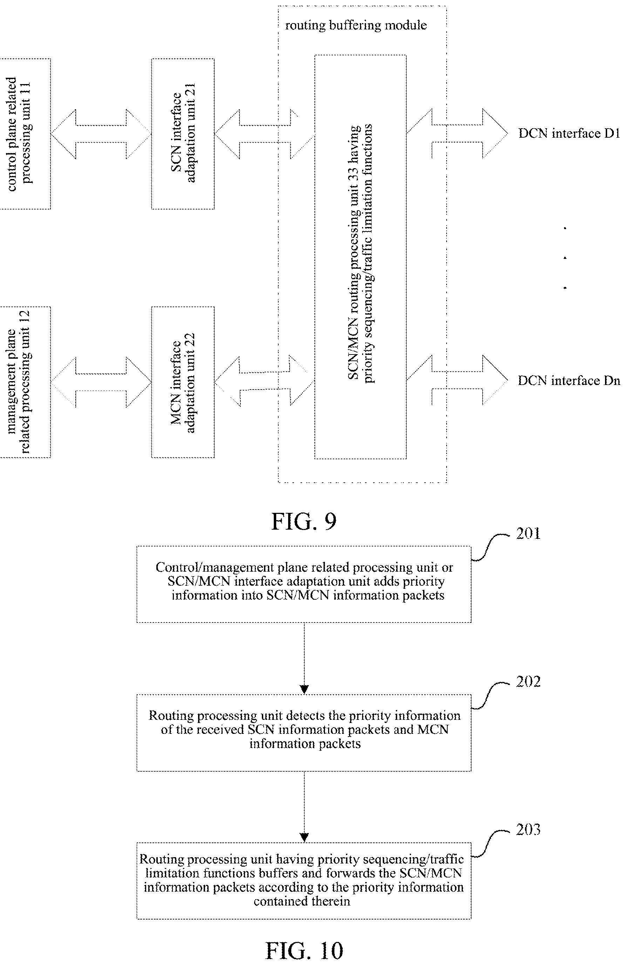

FIG. 9 is a schematic diagram of the structure of a device for transmitting SCN and MCN information using a routing processing unit for priority sequencing/traffic limitation according to the present invention. As shown in FIG. 9, the device comprises a control plane related processing unit, a SCN interface adaptation unit, a management plane related processing unit, a MCN interface adaptation unit, a SCN/MCN routing processing unit having priority sequencing/traffic limitation functions, and DCN interfaces (D1, ..., Dn).

The SCN/MCN routing processing unit having priority sequencing/traffic limitation functions may be called a routing buffering module.

The control plane related processing unit is used to generate information related to SCN (referred to as SCN information for short hereinafter) and transmit the SCN information to the SCN interface adaptation unit; additionally, the control plane related processing unit is also used to receive SCN information of other nodes from the SCN interface adaptation unit through different DCN interfaces;

The SCN interface adaptation unit is used to perform protocol and interface adaptation for the SCN information sent by the control plane related processing unit, and then transmit the SCN information to the SCN/MCN routing processing unit; additionally, the SCN interface adaptation unit is also used to transmit SCN information of other nodes from different DCN interfaces forwarded by the SCN/MCN routing processing unit to the control plane related processing unit;

The management plane related processing unit is used to generate information related to MCN (referred to as MCN information for short hereinafter) and transmit the MCN information to the MCN interface adaptation unit; additionally, the management plane related processing unit is also used to receive MCN information of other nodes from the MCN interface adaptation unit through different DCN interfaces;

The MCN interface adaptation unit is used to perform protocol and interface adaptation for the MCN information sent by the management plane related processing unit, and then transmit the MCN information to the SCN/MCN routing processing unit; additionally, the MCN interface adaptation unit is also used to transmit MCN information of other nodes from different DCN interfaces forwarded by the SCN/MCN routing processing unit to the management plane related processing unit;

The SCN/MCN routing processing unit having priority sequencing/traffic limitation functions is used to execute SCN and MCN routing functions; execute MCN routing function for SCN information from the local node delivered by the SCN interface adaptation unit, MCN information from the local node delivered by the MCN interface adaptation unit, as well as SCN information and MCN information of other nodes from different DCN interfaces; and according to corresponding destination forwarding routes, send the received SCN information of other nodes to the SCN interface adaptation unit to be processed by the control plane related processing unit of the local node, send the received MCN information of other nodes to the MCN interface adaptation unit to be processed by the management plane related processing unit of the local node, or send the SCN information of the local node transmitted by the SCN interface adaptation unit to a corresponding DCN interface to be finally sent to a control plane related processing unit of other nodes for processing, or send the MCN information of the local node transmitted by the MCN interface adaptation unit to a corresponding DCN interface to be finally sent to a management plane related processing unit of other nodes for processing.

Additionally, the SCN/MCN routing processing unit having priority sequencing/traffic limitation functions is also used to perform priority sequencing and/or traffic limitation for SCN information packets and MCN information packets to be sent to the same destination DCN interface, and preferentially forward the SCN information to a corresponding DCN interface to be sent to a control plane related processing unit of other nodes for processing.

In other words, the routing processing unit in this embodiment performs routing processing as well as priority sequencing and traffic limitation for SCN information and MCN information in order to achieve preferential forwarding of control information of ASON SCN.

FIG. 10 is a flow chart of a method for transmitting SCN and MCN information using a routing processing unit for priority sequencing/traffic limitation according to the present invention. As shown in FIG. 10, the method comprises the following steps of:
201: The control plane related processing unit or SCN interface adaptation unit adds priority information of a higher priority into SCN information packets containing SCN information of the local node to be transmitted; the management plane related processing unit or MCN interface adaptation unit adds priority information of a lower priority into MCN information packets containing MCN information of the local node to be transmitted;
202: The SCN/MCN routing processing unit having priority sequencing/traffic limitation functions detects priority information of the SCN information packets and MCN information packets transmitted by the SCN interface adaptation unit and MCN interface adaptation unit;
203: The buffer unit having priority sequencing/traffic limitation functions buffers and forwards the SCN information packets and MCN information packets according to the priority information contained therein; the following rules are followed when the buffering and forwarding are performed:
   203A: The information packets to be sent to the same destination DCN interface are sequenced according to their priorities when buffered so that information packets having a higher priority are forwarded preferentially; since the priority of the SCN information packets is higher than that of the MCN information packets, the SCN information packets are forwarded preferentially;

Preferential forwarding can be implemented in the following two ways:
1) Information packets having a lower priority (MCN information packets) are not transmitted until the completion of transmitting the information packets having a higher priority (SCN information packet) ;
2) More bandwidth is allocated to the information packets having a higher priority and less bandwidth to the information packets having a lower priority at the same time.

203B: As for information packets to be sent to the same destination DCN interface, when the traffic of the MCN information packets is higher than a pre-set low-priority traffic upper limit, forwarding of the MCN information packets is limited and the traffic of the MCN information packets is limited below the low-priority traffic upper limit, and the information packets to be forwarded are buffered and sequenced in the buffer unit; when the quantity of the MCN information packets buffered is larger than a pre-set low-priority buffering upper limit, corresponding packets may be discarded;

When the preferential forwarding is implemented in the above way of 2), traffic limitation is performed by further reducing the bandwidth allocated to the information packets having a lower priority based on the current bandwidth allocated thereto.

203C: As for information packets to be sent to the same destination DCN interface, when the quantity of the SCN information packets buffered is higher than a pre-set high-priority buffering upper limit, the traffic of the MCN information packets can further be reduced to shorten the buffering time of the SCN information packets as much as possible, thereby ensuring the forwarding of the information packets having a higher priority.

Additionally, according to the basic principle of the present invention, when a routing processing unit is used to perform priority sequencing/traffic limitation, the routing processing unit may identify the SCN information packet (information packet with a higher priority) and MCN information packet (information packet with a lower priority) in other ways besides the way of identifying the SCN information packet and MCN information packet according to the priority information contained therein, for example:
the control plane related processing unit or the SCN interface adaptation unit, as well as the management plane related processing unit or the MCN interface adaptation unit do not add priority information into SCN information packets/MCN information packets; the routing processing unit distinguishes the SCN information packet (information packet with a higher priority) from the MCN information packet (information packet with a lower priority) according to the physical port or logical port of the SCN information packet/MCN information packet.

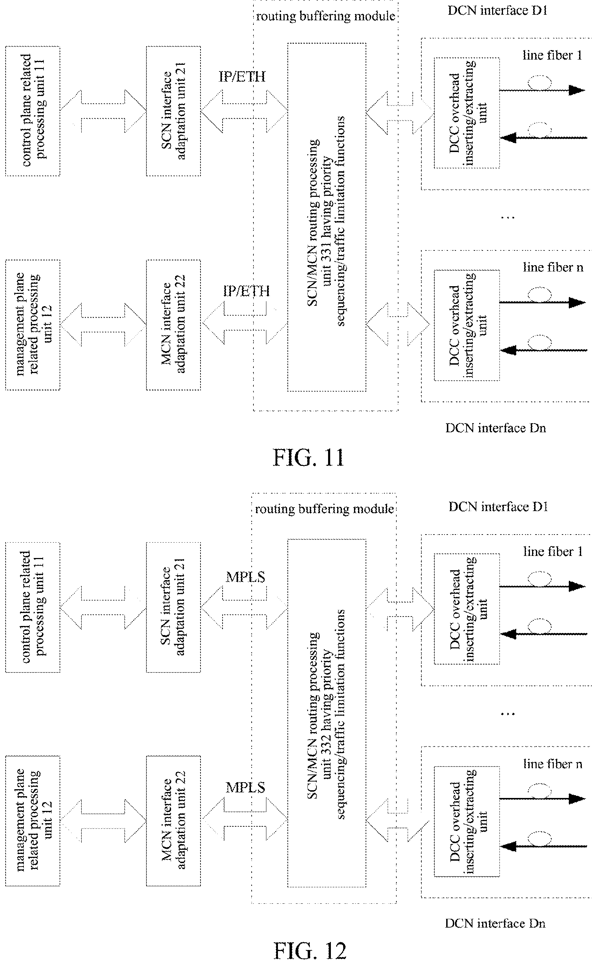

FIG. 11 is a schematic diagram of the structure of a device for transmitting SCN and MCN information according to a third embodiment of the present invention. As shown in FIG. 11, in the device, the interfaces between the SCN interface adaptation unit and MCN interface adaptation unit and the SCN/MCN routing processing unit having priority sequencing/traffic limitation functions are based on IP protocol, and the SCN/MCN routing processing unit has a Layer-3 (L3) switching function based on IP.

The SCN interface adaptation unit and MCN interface adaptation unit respectively encapsulate SCN information and MCN information in IP messages which are then sent to the SCN/MCN routing processing unit; the SCN/MCN routing processing unit sequences, buffers and forwards the SCN information and MCN information according to the Type of Service field in the IP messages, thereby achieving preferential forwarding of the SCN information.

The format of the IP message is as follows:

| | | | | |
|---|---|---|---|---|
| version | message length | type of service | total length | |
| identification | | | flag | fragment offset |
| time to live | protocol | header checksum | | |
| source IP address | | | | |
| destination IP address | | | | |
| IP options | | | | |

Type of Service (TOS) field in an IP message is 8 bits, in which the former 3 bits is Precedence sub-field (neglected herein). The 8^{th} bit is reserved and not used. The 4^{th} to 7^{th} bits represent delay, throughput, reliability and expense respectively; when the corresponding bits are set to 1, they indicate minimum time delay, maximum throughput, highest reliability and minimum expense are respectively required. Only one of the four bits of TOS can be set to 1. The four bits can all be 0, which indicates a general service.

The present invention uses the above TOS field to identify priority, and the field is located at the second byte of the IP header. Usages of the TOS field in RFC0791 (IP protocol) and RFC2474 (DSCP) are slightly different, but the basic ideas of them are both providing priority information through different TOS values.

The SCN/MCN routing processing unit in FIG. 11 is based on IP L3 switching, has priority sequencing/traffic controlling functions, and can forward IP messages with a higher priority preferentially. Different TOS information in the IP messages is filled by the control plane related processing unit and management plane related processing unit respectively. In other words, the TOS field value of the IP messages encapsulating SCN information can be set to a larger value, while the TOS field value of the IP messages encapsulating MCN information can be set to a smaller value (for example, the TOS field value corresponding to SCN information is 4, and the TOS field value corresponding to MCN information is 0) in order that SCN information is forwarded preferentially.

FIG. 12 is a schematic diagram of the structure of a device for transmitting SCN and MCN information according to a fourth embodiment of the present invention. As shown in FIG. 12, in the device, the interfaces between the SCN interface adaptation unit and MCN interface adaptation unit and the SCN/MCN routing processing unit having priority sequencing/traffic limitation functions are based on MPLS protocol, and the SCN/MCN routing processing unit has Layer-2/Layer-3 (L2/L3) switching functions based on MPLS. The QoS mechanism in MPLS protocol is enabled, and data packets with a higher priority is forwarded preferentially based on the QoS information in MPLS messages, thereby achieving preferential forwarding of SCN information. Similarly, the QoS information in MPLS messages is set by the control plane related processing unit and management plane related processing unit respectively, and the priority of the data packets encapsulating SCN information can be set as higher than that of the data packets encapsulating MCN information in order that SCN information is forwarded preferentially.

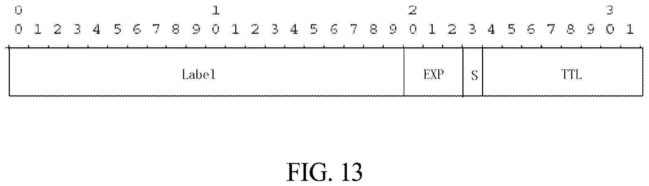

The format of a MPLS label is shown in FIG. 13, the format of a tunnel label is the same as that of a PW label, and specific definition of the field is as follows:
Label (20 bits): label value.
EXP (3 bits): identifying QoS information.
S (1 bit): indicating whether the label is positioned at the bottom of the label stack; 1 represents being at the bottom.
TTL (8 bits): time to live of the packet

The present invention uses the above EXP field to identify the priorities of data packets encapsulating SCN information and MCN information.

### Industrial Applicability

The device and method of the present invention can realize efficient transmission of SCN information and reduction of the impact of MCN information on transmission of SCN information when SCN and MCN use the same in-band DCC channel or GCC channel.

## Claims

1. A device for transmitting Signaling Communication Network SCN information and Management Communication Network MCN information in an Automatic Switch Optical Network ASON, **characterized by** comprising: a control plane related processing unit (11), a SCN interface adaptation unit (21), a management plane related processing unit (12), a MCN interface adaptation unit, and Data Communication Network, DCN, interfaces; wherein
the device further comprises a routing buffering module;
the routing buffering module is configured to perform routing processing and buffering for received SCN information, which is generated by the control plane related processing unit and for which protocol and interface adaptation processing has been performed by the SCN interface adaptation unit (21), and received MCN information, which is generated by the management plane related processing unit (12) and for which protocol and interface adaptation processing has been performed by the MCN interface adaptation unit (22), and to preferentially transmit the received SCN information to the DCN interfaces to be forwarded;
wherein the routing buffering module comprises a routing processing unit and a buffer unit; and wherein:
the routing processing unit is configured to receive SCN information and MCN information from the SCN interface adaptation unit and the MCN interface adaptation unit respectively, and to transmit the received SCN information and MCN information to the buffer unit via different physical channels or logical channels after performing routing processing for the received SCN information and MCN information;
the buffer unit (41) has priority sequencing and buffering functions, distinguishes received SCN information from received MCN information according to different physical or logical channels, performs priority sequencing and buffering for the received SCN information and MCN information, and preferentially transmits SCN information to the DCN interfaces to be forwarded.

2. The device according to claim 1, wherein the routing processing unit is divided into a SCN routing processing unit and a MCN routing processing unit; and wherein:
the SCN routing processing unit is configured to receive SCN information from the SCN interface adaptation unit and transmit the SCN information to the buffer unit (41) via a first physical channel;
the MCN routing processing unit is configured to receive MCN information from the MCN interface adaptation unit and transmit the MCN information to the buffer unit (41) via a second physical channel;
the buffer unit (41) preferentially transmits the SCN information received from the first physical channel to the DCN interfaces to be forwarded.

3. The device according to claim 2, wherein the first physical channel and the second physical channel are different channels respectively selected from Ethernet channel and High-level Data Link Control HDLC channel.

4. The device according to claim1, wherein,
the routing processing unit transmits the received SCN information to the buffer unit (41) via a first logical channel, and transmits the received MCN information to the buffer unit (41) via a second logical channel;
the first logical channel and the second logical channel are Virtual Local Area Network VLAN logical channels with different VLAN Identifications IDs;
the buffer unit (41) distinguishes SCN information from MCN information according to VLAN IDs, and preferentially transmits the SCN information received from the first logical channel to the DCN interfaces to be forwarded.

5. The device according to any one of claims 1∼4, wherein,
the buffer unit (41) further has a traffic limitation function, and as for SCN/MCN information packets to be sent to the same destination DCN interface:
when the quantity of MCN information packets buffered is larger than a pre-set low-priority buffering upper limit or the quantity of SCN information packets buffered is larger than a pre-set high-priority buffering upper limit, MCN information packets are discarded so that the quantity of the MCN information packets buffered is lower than the upper limit; and/or
when the quantity of MCN information packets buffered is larger than the pre-set low-priority buffering upper limit or the quantity of SCN information packets buffered is larger than the pre-set high-priority buffering upper limit, traffic of the MCN information packets is reduced.

6. The device according to claim 1, wherein the routing buffering module comprises a routing processing unit; and wherein:
the control plane related processing unit or the SCN interface adaptation unit is further configured to add priority information with a higher priority into SCN information packets containing SCN information of a local node to be transmitted;
the management plane related processing unit (12) or MCN interface adaptation unit is further configured to add priority information with a lower priority into MCN information packets containing MCN information of the local node to be transmitted;
the routing processing unit is configured to receive SCN information packets from the SCN interface adaptation unit and receive MCN information packets from the MCN interface adaptation unit, perform routing processing for the SCN information packets and the MCN information packets, perform priority sequencing and buffering according to the priority information, and preferentially transmit the SCN information packets which have a higher priority to the DCN interfaces to be forwarded.

7. The device according to claim 6, wherein,
the control plane related processing unit or the SCN interface adaptation unit is further configured to set a larger value at a Type of Service (TOS) field of Internet Protocol (IP) messages encapsulating SCN information of the local node to be transmitted;
the management plane related processing unit (12) or the MCN interface adaptation unit is further configured to set a smaller value at the TOS field of IP messages encapsulating MCN information of the local node to be transmitted;
interfaces between the routing processing unit and the SCN interface adaptation unit and MCN interface adaptation unit are based on IP protocol, and the routing processing unit has a Layer-3 switching function; the routing processing unit distinguishes SCN information from MCN information according to the TOS field of received IP messages, and preferentially transmits SCN information packets which have a higher priority to the DCN interfaces to be forwarded.

8. The device according to claim 6, wherein,
the control plane related processing unit or the SCN interface adaptation unit is further configured to set a larger value at an Experimental EXP)field of Multiprotocol Label Switching MPLS data packets encapsulating SCN information of the local node to be transmitted;
the management plane related processing unit (12) or the MCN interface adaptation unit is further configured to set a smaller value at the EXP field of MPLS data packets encapsulating MCN information of the local node to be transmitted;
interfaces between the routing processing unit and the SCN interface adaptation unit and MCN interface adaptation unit are based on MPLS protocol, and the routing processing unit has Layer-2/Layer-3 switching functions; the routing processing unit distinguishes SCN information from MCN information according to the EXP field of received MPLS data packets, and preferentially transmits the SCN information packets which have a higher priority to the DCN interfaces to be forwarded.

9. The device according to any one of claims 6∼8, wherein,
the routing processing unit further has a traffic limitation function, and as for SCN/MCN information packets to be sent to the same destination DCN interface:
when the quantity of MCN information packets buffered is larger than a pre-set low-priority buffering upper limit or the quantity of SCN information packets buffered is larger than a pre-set high-priority buffering upper limit, MCN information packets are discarded so that the quantity of the MCN information packets buffered is lower than the upper limit; and/or
when the quantity of MCN information packets buffered is larger than a pre-set low-priority buffering upper limit or the quantity of SCN information packets buffered is larger than a pre-set high-priority buffering upper limit, traffic of the MCN information packets is reduced.

10. A method for transmitting Signaling Communication Network SCN information and Management Communication Network MCN information in an Automatic Switch Optical Network ASON, the method **characterized by** comprising the following steps of:
A: a control plane related processing unit transmitting generated SCN information to a SCN interface adaptation unit for protocol and interface adaptation processing, and then the SCN information being output to a routing buffering module; a management plane related processing unit (12) transmitting generated MCN information to a MCN interface adaptation unit for protocol and interface adaptation processing, and then the MCN information being output to the routing buffering module;
B: the routing buffering module performing routing processing and buffering for received SCN information and MCN information, and forwarding the received SCN information preferentially; wherein the step B further comprises the following sub-steps of:
B1: a routing processing unit of the routing buffering module transmitting the received SCN information and MCN information to a buffer unit of the routing buffering module via different physical channels or logical channels after performing routing processing for the received SCN information and MCN information;
B2: the buffer unit distinguishing received SCN information and MCN information according to the different physical or logical channels, performing priority sequencing and buffering for the received SCN information and MCN information and forwarding the SCN information preferentially.

11. The method according to claim 10,
wherein,
the routing processing unit transmits the SCN information via one of Ethernet channel and High-level Data Link Control HDLC channel and transmits the MCN information via the other; or
the routing processing unit transmits the SCN information and MCN information via Virtual Local Area Network VLAN logical channels with different VLAN identifications IDs, and the buffer unit distinguishes SCN information from MCN information according to the VLAN IDs.

12. The method according to claim 10, further comprising:
before the SCN information is transmitted to the routing buffering module, the control plane related processing unit or the SCN interface adaptation unit adding priority information with a higher priority into SCN information packets containing SCN information of a local node to be transmitted;
before the MCN information is transmitted to the routing buffering module, the management plane related processing unit or the MCN interface adaptation unit adding priority information with a lower priority into MCN information packets containing MCN information of the local node to be transmitted;
the routing buffering module performing routing processing for the SCN information packets and MCN information packets, performing priority sequencing and buffering according to the priority information, and preferentially forwarding the SCN information packets which have a higher priority (6202-6203).

13. The method according to claim 12, wherein,
the SCN information packets and MCN information packets are IP messages, and the priority information is a Type of Service TOS field of the IP messages;
the SCN information packets and MCN information packets are MPLS data packets, and the priority information is an Experimental EXP field of the MPLS data packets.

14. The method according to any one of claims 10∼13, wherein the method further comprises the following steps of:
as for SCN/MCN information packets to be sent to the same destination DCN interface:
when the quantity of MCN information packets buffered in the routing buffering module is larger than a pre-set low-priority buffering upper limit or the quantity of SCN information packets buffered is larger than a pre-set high-priority buffering upper limit, discarding MCN information packets so that the quantity of the MCN information packets buffered is lower than the upper limit; and/or
when the quantity of MCN information packets buffered in the routing buffering module is larger than a pre-set low-priority buffering upper limit or the quantity of SCN information packets buffered is larger than a pre-set high-priority buffering upper limit, reducing traffic of the MCN information packets.

## Patentansprüche

1. Vorrichtung zur Übertragung von SCN- (Signaling Communication Network) Informationen und MCN- (Management Communication Network) Informationen in einem automatisch vermittelnden, optischen Netzwerk (Automatic Switch Optical Network; ASON), **dadurch gekennzeichnet, dass** sie folgendes aufweist: eine auf eine Steuerungsebene bezogene Verarbeitungseinheit (11), eine SCN-Schnittstellen-Anpassungseinheit (21), eine auf eine Verwaltungsebene bezogene Verarbeitungseinheit (12), eine MCN-Schnittstellen-Anpassungseinheit, und DCN- (Data Communication Network) Schnittstellen; wobei
die Vorrichtung weiterhin ein Routing-Zwischenspeichermodul aufweist;
das Routing - Zwischenspeichermodul dazu eingerichtet ist, um eine Routingverarbeitung und Zwischenspeicherung für empfangene SCN-Informationen, die von der auf eine Steuerungsebene bezogenen Verarbeitungseinheit generiert wurden und für die eine Protokoll- und Schnittstellenanpassung durch die SCN-Schnittstellen-Anpassungseinheit (21) durchgeführt wurde, und für empfangene MCN-Informationen durchzuführen, die von der auf eine Verwaltungsebene bezogenen Verarbeitungseinheit (12) generiert wurden und für die eine Protokoll- und Schnittstellenanpassung durch die MCN-Schnittstellen-Anpassungseinheit (22) durchgeführt wurde, und um vorzugsweise die empfangenen SCN-Informationen an die DCN-Schnittstellen zur Weiterleitung zu übertragen;
wobei das Routing - Zwischenspeichermodul eine Routing-Verarbeitungseinheit und eine Zwischenspeichereinheit aufweist; und wobei:
die Routing-Verarbeitungseinheit eingerichtet ist, um SCN-Informationen und MCN-Informationen von der SCN-Schnittstellen-Anpassungseinheit beziehungsweise der MCN-Schnittstellen-Anpassungseinheit zu empfangen, und um die empfangenen SCN-Informationen und MCN-Informationen an die Zwischenspeichereinheit über verschiedene physikalische Kanäle oder logische Kanäle nach der Durchführung der Routingverarbeitung für die empfangenen SCN-Informationen und MCN-Informationen zu übertragen;
die Zwischenspeichereinheit (41) Prioritätssequenzierungs- und Zwischenspeicherfunktionen aufweist, die empfangene SCN-Informationen von der empfangenen MCN-Informationen gemäß verschiedener physikalischer oder logischer Kanäle unterscheidet, eine Prioritätssequenzierung und das Zwischenspeichern für die erhaltene SCN-Informationen und MCN-Informationen durchführt, und vorzugsweise SCN-Informationen an die DCN-Schnittstellen zur Weiterleitung überträgt.

2. Vorrichtung nach Anspruch 1, wobei die Routing-Verarbeitungseinheit unterteilt ist in eine SCN-Routing-Verarbeitungseinheit und eine MCN-Routing-Verarbeitungseinheit; und wobei:
die SCN-Routing-Verarbeitungseinheit eingerichtet ist, um SCN-Informationen von der SCN-Schnittstellen-Anpassungseinheit zu empfangen und die SCN-Informationen an die Zwischenspeichereinheit (41) über einen ersten physikalischen Kanal zu übertragen;
die MCN-Routing-Verarbeitungseinheit eingerichtet ist, um MCN-Informationen von der MCN-Schnittstellen-Anpassungseinheit zu empfangen und die MCN-Informationen an die Zwischenspeichereinheit (41) über einen zweiten physikalischen Kanal zu übertragen;
die Zwischenspeichereinheit (41) vorzugsweise die von dem ersten physikalischen Kanal empfangenen SCN-Informationen an die DCN-Schnittstellen zur Weiterleitung überträgt.

3. Vorrichtung nach Anspruch 2, wobei der erste physikalische Kanal und der zweite physikalische Kanal verschiedene Kanäle sind, die jeweils aus einem Ethernet-Kanal und einem High-Level Data Link Control (HDLC)-Kanal ausgewählt werden.

4. Vorrichtung nach Anspruch 1, wobei
die Routing-Verarbeitungseinheit die empfangenen SCN-Informationen an die Zwischenspeichereinheit (41) über einen ersten logischen Kanal überträgt, und die empfangenen MCN-Informationen an die Zwischenspeichereinheit (41) über einen zweiten logischen Kanal überträgt;
der erste logische Kanal und der zweite logische Kanal Virtual Local Area Network (VLAN) - Logikkanäle mit verschiedenen VLAN-Identifizierungsnummern sind;
die Zwischenspeichereinheit (41) SCN-Informationen von MCN-Informationen gemäß den VLAN-Identifizierungsnummern unterscheidet, und vorzugsweise die von dem ersten logischen Kanal empfangenen SCN-Informationen an die DCN-Schnittstellen zur Weiterleitung überträgt.

5. Vorrichtung nach einem der Ansprüche 1 bis 4, wobei
die Zwischenspeichereinheit (41) weiterhin eine Datenverkehr-Begrenzungsfunktion hat, und für die SCN/MCN-Informationspakete, die an dieselbe Ziel-DCN-Schnittstelle gesendet werden sollen, folgendes gilt:
wenn die Quantität der zwischengespeicherten MCN-Informationspakete größer ist als eine voreingestellte Pufferobergrenze mit niedriger Priorität oder die Quantität der zwischengespeicherten SCN-Informationspakete größer ist als eine voreingestellte Pufferobergrenze mit hoher Priorität, werden MCN-Informationspakete verworfen, so dass die Quantität der zwischengespeicherten MCN-Informationen kleiner als die Obergrenze ist; und/oder
wenn die Quantität der zwischengespeicherten MCN-Informationspakete größer ist als eine voreingestellte Pufferobergrenze mit niedriger Priorität oder die Quantität der zwischengespeicherten SCN-Informationspakete größer ist als eine voreingestellte Pufferobergrenze mit hoher Priorität, wird der Datenverkehr der MCN-Informationspakete reduziert.

6. Vorrichtung nach Anspruch 1, wobei das Routing-Zwischenspeichermodul eine Routing-Verarbeitungseinheit aufweist; und wobei:
die auf eine Steuerungsebene bezogene Verarbeitungseinheit oder die SCN-Schnittstellen-Anpassungseinheit weiterhin eingerichtet ist, um Prioritätsinformationen mit einer höheren Priorität den SCN-Informationspaketen hinzuzufügen, die SCN-Informationen eines lokalen Knotens enthalten, die übertragen werden sollen;
die auf eine Verwaltungsebene bezogene Verarbeitungseinheit (12) oder die MCN-Schnittstellen-Anpassungseinheit weiterhin eingerichtet ist, um Prioritätsinformationen mit einer niedrigeren Priorität den MCN-Informationspaketen hinzuzufügen, die MCN-Informationen eines lokalen Knotens enthalten, die übertragen werden sollen;
die Routing-Verarbeitungseinheit eingerichtet ist, um die SCN-Informationspakete von der SCN-Schnittstellen-Anpassungseinheit zu erhalten und die MCN-Informationspakete von der MCN-Schnittstellen-Anpassungseinheit zu erhalten, die Routing-Verarbeitung für die SCN-Informationspakete und die MCN-Informationspakete durchzuführen, eine Prioritätssequenzierung- und -Zwischenspeicherung gemäß der Prioritätsinformationen durchzuführen, und vorzugsweise die SCN-Informationspakete, die eine höhere Priorität haben, an die DCN-Schnittstellen zur Weiterleitung zu übertragen.

7. Vorrichtung nach Anspruch 6, wobei
die auf eine Steuerungsebene bezogene Verarbeitungseinheit oder die SCN-Schnittstellen-Anpassungseinheit weiterhin eingerichtet ist, um einen größeren Wert in einem Type-of-Service bzw. TOS-Feld der Internetprotokoll (IP)-Nachrichten, die die zu übertragende SCN-Informationen des lokalen Knotens kapseln, voreinzustellen;
die auf eine Verwaltungsebene bezogene Verarbeitungseinheit (12) oder die MCN-Schnittstellen-Anpassungseinheit weiterhin eingerichtet ist, um einen niedrigeren Wert in einem Type-of-Service bzw. TOS-Feld der Internetprotokoll (IP)-Nachrichten, die die zu übertragende MCN-Informationen des lokalen Knotens kapseln, voreinzustellen;
Schnittstellen zwischen der Routing-Verarbeitungseinheit und der SCN-Schnittstellen-Anpassungseinheit und der MCN-Schnittstellen-Anpassungseinheit auf einem IP-Protokoll basieren, und die Routing-Verarbeitungseinheit eine Layer-3-Vermittlungsfunktion hat; die Routing-Verarbeitungseinheit SCN-Informationen von MCN-Informationen gemäß dem TOS-Feld der erhaltenen IP-Nachrichten unterscheidet, und vorzugsweise SCN-Informationspakete, die eine höhere Priorität haben, an die DCN-Schnittstellen zur Weiterleitung überträgt.

8. Vorrichtung nach Anspruch 6, wobei
die auf eine Steuerungsebene bezogene Verarbeitungseinheit oder die SCN-Schnittstellen-Anpassungseinheit weiterhin eingerichtet ist, um einen größeren Wert in einem Experimental- oder EXP-Feld von Multiprotocol-Label-Switching- bzw. MPLS-Datenpaketen, die die zu übertragende SCN-Informationen des lokalen Knotens kapseln, voreinzustellen;
die auf eine Verwaltungsebene bezogene Verarbeitungseinheit (12) oder die MCN-Schnittstellen-Anpassungseinheit weiterhin eingerichtet ist, um einen kleineren Wert in einem EXP-Feld von MPLS-Datenpaketen, die die zu übertragende MCN-Informationen des lokalen Knotens kapseln, voreinzustellen;
Schnittstellen zwischen der Routing-Verarbeitungseinheit und der SCN-Schnittstellen-Anpassungseinheit und der MCN-Schnittstellen-Anpassungseinheit auf einem MPLS-Protokoll basieren, und die Routing-Verarbeitungseinheit Layer-2/Layer-3-Vermittlungsfunktionen aufweist; die Routing-Verarbeitungseinheit SCN-Information von MCN-Information gemäß dem EXP-Feld der erhaltenen MPLS-Datenpakete unterscheidet, und vorzugsweise SCN-Informationspakete, die eine höhere Priorität haben, an die DCN-Schnittstellen zur Weiterleitung überträgt.

9. Vorrichtung nach einem der Ansprüche 6 bis 8, wobei
die Routing-Verarbeitungseinheit weiterhin eine Datenverkehr-Begrenzungsfunktion hat, und für die SCN/MCN-Informationspakete, die an dieselbe Ziel-DCN-Schnittstelle gesendet werden sollen, folgendes gilt:
wenn die Quantität der zwischengespeicherten MCN-Informationspakete größer ist als eine voreingestellte Pufferobergrenze mit niedriger Priorität oder die Quantität der zwischengespeicherten SCN-Informationspakete größer ist als eine voreingestellte Pufferobergrenze mit hoher Priorität, werden MCN-Informationspakete verworfen, so dass die Quantität der zwischengespeicherten MCN-Informationen kleiner als die Obergrenze ist; und/oder
wenn die Quantität der zwischengespeicherten MCN-Informationspakete größer ist als eine voreingestellte Pufferobergrenze mit niedriger Priorität oder die Quantität der zwischengespeicherten SCN-Informationspakete größer ist als eine voreingestellte Pufferobergrenze mit hoher Priorität, wird der Datenverkehr der MCN-Informationspakete reduziert.

10. Verfahren zur Übertragung von SCN- (Signaling Communication Network) Informationen und MCN- (Management Communication Network) Informationen in einem automatisch vermittelnden, optischen Netzwerk (ASON), wobei das Verfahren **dadurch gekennzeichnet ist, dass** es die folgenden Schritte aufweist:
A: eine auf eine Steuerungsebene bezogene Verarbeitungseinheit überträgt generierte SCN-Informationen an eine SCN-Schnittstellen-Anpassungseinheit für die Protokoll- und Schnittstellen-Anpassungsverarbeitung, und anschließend werden die SCN-Informationen an ein Routing-Zwischenspeichermodul ausgegeben; eine auf eine Verwaltungsebene bezogene Verarbeitungseinheit (12) überträgt generierte MCN-Informationen an eine MCN-Schnittstellen-Anpassungseinheit für die Protokoll- und Schnittstellen-Anpassungsverarbeitung, und anschließend werden die MCN-Informationen an das Routing-Zwischenspeichermodul ausgegeben;
B: das Routing-Zwischenspeichermodul führt die Routingverarbeitung- und - zwischenspeicherung für empfangenen SCN-Informationen und MCN-Informationen aus, und leitet vorzugsweise die empfangenen SCN-Informationen weiter; wobei Schritt B weiterhin die folgenden Teilschritte umfasst:
B1: eine Routing-Verarbeitungseinheit des Routing-Zwischenspeichermoduls überträgt die empfangenen SCN-Informationen und MCN-Informationen an eine Zwischenspeichereinheit des Routing-Zwischenspeichermoduls über verschiedene physikalische Kanäle oder logische Kanäle nach der Durchführung der Routingverarbeitung für die empfangenen SCN-Informationen und MCN-Informationen;
B2: die Zwischenspeichereinheit unterscheidet die empfangenen SCN-Informationen und MCN-Informationen gemäß den verschiedenen physikalischen oder logischen Kanälen, führt eine Prioritätssequenzierung und das Zwischenspeichern für die empfangenen SCN-Informationen und MCN-Informationen durch, und leitet vorzugsweise die SCN-Informationen weiter.

11. Verfahren nach Anspruch 10, wobei
die Routing-Verarbeitungseinheit die SCN-Informationen über den Ethernet-Kanal oder über den High-level Data Link Control (HDLC)-Kanal überträgt und die MCN-Informationen über den jeweils anderen Kanal überträgt; oder
die Routing-Verarbeitungseinheit die SCN-Informationen und die MCN-Informationen über Virtual Local Area Network bzw. VLAN-Logikkanäle mit verschiedenen VLAN-Identifizierungsnummern überträgt, und die Zwischenspeichereinheit SCN-Informationen von MCN-Informationen gemäß den VLAN-Identifizierungsnummern unterscheidet.

12. Verfahren nach Anspruch 10, wobei das Verfahren weiterhin die folgenden Schritte umfasst:
bevor die SCN-Informationen an das Routing-Zwischenspeichermodul übertragen werden, fügt die auf eine Steuerungsebene bezogene Verarbeitungseinheit oder die SCN-Schnittstellen-Anpassungseinheit Prioritätsinformationen mit einer höheren Priorität den SCN-Informationspaketen hinzu, die SCN-Informationen eines lokalen Knotens enthalten, die übertragen werden sollen;
bevor die MCN-Informationen an das Routing- Zwischenspeichermodul übertragen wird, fügt die auf eine Verwaltungsebene bezogene Verarbeitungseinheit oder die MCN-Schnittstellen-Anpassungseinheit Prioritätsinformationen mit einer niedrigeren Priorität den MCN-Informationspaketen hinzu, die MCN-Informationen eines lokalen Knotens enthalten, die übertragen werden sollen;
das Routing-Zwischenspeichermodul führt eine Routing-Verarbeitung für die SCN-Informationspakete und die MCN-Informationspakete durch, führt eine Prioritätssequenzierung- und -zwischenspeicherung gemäß der Prioritätsinformationen durch, und leitet vorzugsweise die SCN-Informationspakete mit einer höheren Priorität weiter (6202-6203).

13. Verfahren nach Anspruch 12, wobei
die SCN-Informationspakete und MCN-Informationspakete IP-Nachrichten sind, und die Prioritätsinformationen ein Type-of-Service- bzw- TOS-Feld der IP-Nachrichten sind;
die SCN-Informationspakete und MCN-Informationspakete MPLS-Datenpakete sind, und die Prioritätsinformationen ein Experimental- bzw. EXP-Feld der MPLS-Datenpakete sind.

14. Verfahren nach einem der Ansprüche 10 bis 13, wobei das Verfahren weiterhin die folgenden Schritte umfasst:
für die SCN/MCN-Informationspakete, die an dieselbe Ziel-DCN-Schnittstelle gesendet werden sollen, gilt folgendes:
wenn die Quantität der zwischengespeicherten MCN-Informationspakete in dem Routing- Zwischenspeichermodul größer ist als eine voreingestellte Pufferobergrenze mit niedriger Priorität oder die Quantität der zwischengespeicherten SCN-Informationspakete größer ist als eine voreingestellte Pufferobergrenze mit hoher Priorität, werden MCN-Informationspakete verworfen, so dass die Quantität der zwischengespeicherten MCN-Informationen kleiner als die Obergrenze ist; und/oder
wenn die Quantität der zwischengespeicherten MCN-Informationspakete in dem Routing- Zwischenspeichermodul größer ist als eine voreingestellte Pufferobergrenze mit niedriger Priorität oder die Quantität der zwischengespeicherten SCN-Informationspakete größer ist als eine voreingestellte Pufferobergrenze mit hoher Priorität, wird der Datenverkehr der MCN-Informationspakete reduziert.

## Revendications

1. Dispositif destiné à transmettre des informations de réseau de communication de signalisation SCN et des informations de réseau de communication de gestion MCN dans un réseau optique à commutation automatique ASON, **caractérisé par** le fait de comprendre : une unité de traitement associée au plan de commande (11), une unité d'adaptation d'interface de réseau SCN (21), une unité de traitement associée au plan de gestion (12), une unité d'adaptation d'interface de réseau MCN, et des interfaces de réseau de communication de données, DCN ; où
le dispositif comprend en outre un module tampon de routage ;
le module tampon de routage est configuré pour réaliser un traitement de routage et un placement en mémoire tampon pour des informations de réseau SCN reçues, qui sont générées par l'unité de traitement associée au plan de commande et pour lesquelles un traitement d'adaptation de protocole et d'interface a été réalisé par l'unité d'adaptation d'interface de réseau SCN (21), et des informations de réseau MCN reçues, qui sont générées par l'unité de traitement associée au plan de gestion (12) et pour lesquelles un traitement d'adaptation de protocole et d'interface a été réalisé par l'unité d'adaptation d'interface de réseau MCN (22), et pour transmettre de manière préférentielle les informations de réseau SCN reçues aux interfaces de réseau DCN pour être retransmises ;
dans lequel le module tampon de routage comprend une unité de traitement de routage et une unité de mémoire tampon ; et dans lequel :
l'unité de traitement de routage est configurée pour recevoir des informations de réseau SCN et des informations de réseau MCN provenant de l'unité d'adaptation d'interface de réseau SCN et de l'unité d'adaptation d'interface de réseau MCN respectivement, et pour transmettre les informations de réseau SCN et les informations de réseau MCN reçues à l'unité de mémoire tampon par le biais de différents canaux physiques ou de différents canaux logiques après avoir réalisé un traitement de routage pour les informations de réseau SNC et les informations de réseau MCN reçues ;
l'unité de mémoire tampon (41) a des fonctions de séquençage de priorité et de mise en mémoire tampon, différencie les informations de réseau SCN reçues par rapport aux informations de réseau MCN reçues en fonction des différents canaux physiques ou des différents canaux logiques, réalise un séquençage de priorité et une mise en mémoire tampon pour les informations de réseau SCN et les informations de réseau MCN reçues, et transmet de manière préférentielle les informations de réseau SCN aux interfaces de réseau DCN pour être retransmises.

2. Dispositif selon la revendication 1, dans lequel l'unité de traitement de routage est divisée en une unité de traitement de routage de réseau SCN et une unité de traitement de routage de réseau MCN ; et dans lequel :
l'unité de traitement de routage de réseau SCN est configurée pour recevoir des informations de réseau SCN provenant de l'unité d'adaptation d'interface de réseau SCN et transmettre les informations de réseau SCN à l'unité de mémoire tampon (41) par le biais d'un premier canal physique ;
l'unité de traitement de routage de réseau MCN est configurée pour recevoir des informations de réseau MCN provenant de l'unité d'adaptation d'interface de réseau MCN et transmettre les informations de réseau MCN à l'unité de mémoire tampon (41) par le biais d'un deuxième canal physique ;
l'unité de mémoire tampon (41) transmet de manière préférentielle les informations de réseau SCN reçues à partir du premier canal physique aux interfaces de réseau DCN pour être retransmises.

3. Dispositif selon la revendication 2, dans lequel le premier canal physique et le deuxième canal physique sont des canaux différents sélectionnés respectivement parmi un canal Ethernet et un canal de commande de liaison de données à haut niveau HDLC.

4. Dispositif selon la revendication 1, dans lequel,
l'unité de traitement de routage transmet les informations de réseau SCN reçues à l'unité de mémoire tampon (41) par le biais d'un premier canal logique, et transmet les informations de canal MCN reçues à l'unité de mémoire tampon (41) par le biais d'un deuxième canal logique ;
le premier canal logique et le deuxième canal logique sont des canaux logiques de réseau local virtuel VLAN avec des identificateurs ID d'identification de réseau VLAN différents ;
l'unité de mémoire tampon (41) différencie les informations de réseau SCN par rapport aux informations de réseau MCN en fonction des identificateurs ID de réseau VLAN, et transmet de manière préférentielle les informations de réseau SCN reçues à partir du premier canal logique aux interfaces de réseau DCN pour être retransmises.

5. Dispositif selon l'une quelconque des revendications 1 à 4, dans lequel,
l'unité de mémoire tampon (41) a en outre une fonction de limitation de trafic, et pour des paquets d'informations de réseau SCN/MCN devant être envoyés à la même interface de réseau DCN de destination :
lorsque la quantité de paquets d'informations de réseau MCN placés en mémoire tampon est plus grande qu'une limite supérieure de placement en mémoire tampon à basse priorité préétablie ou lorsque la quantité de paquets d'informations de réseau SCN placés en mémoire tampon est plus grande qu'une limite supérieure de placement en mémoire tampon à haute priorité préétablie, des paquets d'informations de réseau MCN sont rejetés de sorte que la quantité de paquets d'informations de réseau MCN placés en mémoire tampon soient inférieure à la limite supérieure ; et/ou
lorsque la quantité de paquets d'informations de réseau MCN placés en mémoire tampon est plus grande qu'une limite supérieure de placement en mémoire tampon à basse priorité préétablie ou lorsque la quantité de paquets d'informations de réseau SCN placés en mémoire tampon est plus grande que la limite supérieure de placement en mémoire tampon à haute priorité préétablie, un trafic des paquets d'informations de réseau MCN est réduit.

6. Dispositif selon la revendication 1, dans lequel le module tampon de routage comprend une unité de traitement de routage ; et dans lequel :
l'unité de traitement associée au plan de commande ou l'unité d'adaptation d'interface de réseau SCN est en outre configurée pour ajouter des informations de priorité avec une priorité plus élevée dans des paquets d'informations de réseau SCN contenant des informations de réseau SCN d'un noeud local devant être transmis ;
l'unité de traitement associée au plan de gestion (12) ou l'unité d'adaptation d'interface de réseau MCN est en outre configurée pour ajouter des informations de priorité avec une priorité plus basse dans des paquets d'informations de réseau MCN contenant des informations de réseau MCN du noeud local devant être transmis ;
l'unité de traitement de routage est configurée pour recevoir des paquets d'informations de réseau SCN provenant de l'unité d'adaptation d'interface de réseau SCN et recevoir des paquets d'informations de réseau MCN provenant de l'unité d'adaptation d'interface de réseau MCN, réaliser un traitement de routage pour les paquets d'informations de réseau SCN et les paquets d'informations de réseau MCN, réaliser un séquençage de priorité et un placement en mémoire en fonction des informations de priorité, et transmettre de manière préférentielle les paquets d'informations de réseau SCN qui ont une priorité plus élevée aux interfaces de réseau DCN pour être retransmis.

7. Dispositif selon la revendication 6, dans lequel,
l'unité de traitement associée au plan de commande ou l'unité d'adaptation d'interface de réseau SCN est en outre configurée pour établir une valeur plus grande au niveau d'un champ type de service (TOS) de messages de protocole Internet (IP) encapsulant des informations de réseau SCN du noeud local devant être transmis ;
l'unité de traitement associée au plan de gestion (12) ou l'unité d'adaptation d'interface de réseau MCN est en outre configurée pour établir une valeur plus petite au niveau du champ TOS de messages de protocole IP encapsulant des informations de réseau MCN devant être transmis ;
des interfaces entre l'unité de traitement de routage et l'unité d'adaptation d'interface de réseau SCN sont basées sur le protocole IP, et l'unité de traitement de routage possède une fonction de commutation de couche 3 ; l'unité de traitement de routage différencie les informations de réseau SCN par rapport aux informations de réseau MCN en fonction du champ TOS des messages de protocole IP reçus, et transmet de manière préférentielle les paquets d'informations de réseau SCN qui ont une priorité plus élevée aux interfaces de réseau DCN pour être retransmis.

8. Dispositif selon la revendication 6, dans lequel,
l'unité de traitement associée au plan de commande ou l'unité d'adaptation d'interface de réseau SCN est en outre configurée pour établir une valeur plus grande au niveau d'un champ expérimental EXP des paquets de données de commutation d'étiquettes multi-protocole MPLS encapsulant des informations de réseau SCN d'une noeud lequel devant être transmis ;
l'unité de traitement associée au plan de gestion (12) ou l'unité d'adaptation d'interface de réseau MCN est en outre configurée pour établir une valeur plus petite au niveau du champ EXP des paquets de données de commutation MPLS encapsulant des informations de réseau MCN devant être transmis ;
des interfaces entre l'unité de traitement de routage et l'unité d'adaptation d'interface de réseau SCN et l'unité d'adaptation d'interface de réseau MCN sont basées sur le protocole de commutation MPLS, et l'unité de traitement de routage possède des fonctions de commutation de couche 2/couche 3 ; l'unité de traitement de routage différencie les informations de réseau SCN par rapport aux informations de réseau MCN en fonction du champ EXP des paquets de données de commutation MPLS reçus, et transmet de manière préférentielle les paquets d'informations de réseau SCN qui ont une priorité plus élevée aux interfaces de réseau DCN pour être retransmis.

9. Dispositif selon l'une quelconque des revendications 6 à 8, dans lequel,
l'unité de traitement de routage possède en outre une fonction de limitation de trafic, et pour les paquets d'informations de réseau SCN/MCN devant être envoyés à la même interface de réseau DCN de destination :
lorsque la quantité de paquets d'informations de réseau MCN placés en mémoire tampon est plus grande qu'une limite supérieure de placement en mémoire tampon à basse priorité préétablie ou lorsque la quantité de paquets d'informations de réseau SCN placés en mémoire tampon est plus grande qu'une limite supérieure de placement en mémoire tampon à haute priorité préétablie, des paquets d'informations de réseau MCN sont rejetés de sorte que la quantité de paquets d'informations de réseau MCN placés en mémoire tampon soient inférieure à la limite supérieure ; et/ou
lorsque la quantité de paquets d'informations de réseau MCN placés en mémoire tampon est plus grande qu'une limite supérieure de placement en mémoire tampon à basse priorité préétablie ou lorsque la quantité de paquets d'informations de réseau SCN placés en mémoire tampon est plus grande que la limite supérieure de placement en mémoire tampon à haute priorité préétablie, un trafic des paquets d'informations de réseau MCN est réduit.

10. Procédé destiné à transmettre des informations de réseau de communication de signalisation SCN et des informations de réseau de communication de gestion MCN dans un réseau optique à commutation automatique ASON, le procédé étant **caractérisé par** le fait de comprendre les étapes suivantes :
A : une unité de traitement associée au plan de commande transmettant des informations de réseau SCN générées à une unité d'adaptation d'interface de réseau SCN pour un traitement d'adaptation de protocole et d'interface, et ensuite les informations de réseau SCN étant fournies en sortie à un module tampon de routage ; une unité de traitement associée au plan de gestion (12) transmettant des informations de réseau MCN générées à une unité d'adaptation d'interface de réseau MCN pour un traitement d'adaptation de protocole et d'interface, et ensuite les informations de réseau MCN étant fournies en sortie au module tampon de routage ;
B : le module tampon de routage réalisant un traitement de routage et un placement en mémoire tampon pour les informations de réseau SCN et les informations de réseau MCN reçues, et retransmettant les informations de réseau SCN reçues de manière préférentielle ; dans lequel l'étape B comprend en outre les sous-étapes :
B1 : une unité de traitement de routage du module tampon de routage transmettant les informations de réseau SCN et les informations de réseau MCN reçues à une unité de mémoire tampon du module tampon de routage par le biais de différents canaux physiques ou de différents canaux logiques après avoir réalisé un traitement de routage pour les informations de réseau SCN et les informations de réseau MCN reçues ;
B2 : l'unité de mémoire tampon différenciant les informations de réseau SCN et les informations de réseau MCN reçues en fonction des différents canaux physiques ou logiques, réalisant un séquençage de priorité et un placement en mémoire tampon pour les informations de réseau SCN et les informations de réseau MCN reçues et retransmettant les informations de réseau SCN de manière préférentielle.

11. Procédé selon la revendication 10,
dans lequel,
l'unité de traitement de routage transmet les informations de réseau SCN par le biais d'un premier d'un canal Ethernet et d'un canal de commande de liaison de données à haut niveau HDLC et transmet les informations de réseau MCN par le biais de l'autre ; ou
l'unité de traitement de routage transmet les informations de réseau SCN et les informations de réseau MCN par le biais de canaux logiques de réseau virtuel VLAN avec différents identificateurs ID d'identification de réseau VLAN, et l'unité de mémoire tampon différencie les informations de réseau SCN par rapport aux informations de réseau MCN en fonction des identificateurs ID de réseau VLAN.

12. Procédé selon la revendication 10, comprenant en outre :
avant que les informations de réseau SCN ne soient transmises au module tampon de routage, l'unité de traitement associée au plan de commande ou l'unité d'adaptation d'interface de réseau SCN ajoutant des informations de priorité avec une priorité plus élevée dans des paquets d'informations de réseau SCN contenant des informations de réseau SCN d'un noeud local pour être transmis ;
avant que les informations de réseau MCN ne soient transmises au module tampon de routage, l'unité de traitement associée au plan de gestion ou l'unité d'adaptation d'interface de réseau MCN ajoutant des informations de priorité avec une priorité plus basse dans des paquets d'informations de réseau MCN contenant des informations de réseau MCN du noeud local pour être transmis ;
le module tampon de routage réalisant un traitement de routage pour les paquets d'informations de réseau SCN et les paquets d'informations de réseau MCN, réalisant un séquençage de priorité et un placement en mémoire tampon en fonction des informations de priorité, et retransmettant de manière préférentielle les paquets d'informations de réseau SCN qui ont une priorité plus élevée (6202-6203).

13. Procédé selon la revendication 12, dans lequel,
les paquets d'informations de réseau SCN et les paquets d'informations de réseau MCN sont des messages de protocole IP, et les informations de priorité sont un champ type de service TOS des messages de protocole IP ;
les paquets d'informations de réseau SCN et les paquets d'informations de réseau MCN sont des paquets de données de commutation MPLS, et les informations de priorité sont un champ expérimental EXP des paquets de données de commutation MPLS.

14. Procédé selon l'une quelconque des revendications 10 à 13, dans lequel le procédé comprend en outre les étapes suivantes :
pour des paquets d'informations de réseau SCN/MCN devant être envoyés à la même interface de réseau DCN de destination :
lorsque la quantité de paquets d'informations de réseau MCN placés en mémoire tampon est plus grande qu'une limite supérieure de placement en mémoire tampon à basse priorité préétablie ou lorsque la quantité de paquets d'informations de réseau SCN placés en mémoire tampon est plus grande qu'une limite supérieure de placement en mémoire tampon à haute priorité préétablie, rejeter des paquets d'informations de réseau MCN de sorte que la quantité de paquets d'informations de réseau MCN placés en mémoire tampon soient inférieure à la limite supérieure ; et/ou
lorsque la quantité de paquets d'informations de réseau MCN placés en mémoire tampon est plus grande qu'une limite supérieure de placement en mémoire tampon à basse priorité préétablie ou lorsque la quantité de paquets d'informations de réseau SCN placés en mémoire tampon est plus grande que la limite supérieure de placement en mémoire tampon à haute priorité préétablie, réduire un trafic des paquets d'informations de réseau MCN.
